Europäisches Patentamt

European Patent Office

Office européen des brevets

(11) Veröffentlichungsnummer: **0 459 261 A2**

# EUROPÄISCHE PATENTANMELDUNG

(21) Anmeldenummer: 91108109.9

(22) Anmeldetag: 18.05.91

(51) Int. Cl.5: **G02B 6/44**

(30) Priorität: 30.05.90 DE 4017337

(43) Veröffentlichungstag der Anmeldung:
04.12.91 Patentblatt 91/49

(84) Benannte Vertragsstaaten:
CH DE FR GB IT LI SE

(71) Anmelder: **kabelmetal electro GmbH**
**Kabelkamp 20 Postfach 260**
**W-3000 Hannover 1(DE)**

(72) Erfinder: **Schauer, Friedrich**
**Forstweg 10**
**W-8501 Heroldsberg(DE)**
Erfinder: **Chille, Wolfgang**
**Stiftstrasse 2**
**W-8507 Oberasbach(DE)**
Erfinder: **Böll, Jürgen**
**Simmelberger Weg 296**
**W-8501 Heroldsberg(DE)**

(54) Verfahren zur Herstellung eines Wickelkörpers aus einem Lichtwellenleiter.

(57) Es wird ein Verfahren zur Herstellung eines Wickelkörpers aus einem Lichtwellenleiter angegeben, mit welchem der Lichtwellenleiter von einer Spule abgezogen und in einer Wickelvorrichtung auf einen Kern aufgewickelt wird. Damit während des Wickelvorgangs und auch im fertigen Wickelkörper keine Windungen abrutschen können, wird die äußere Oberfläche des Lichtwellenleiters vor dem Auftreffen auf die bereits auf den Kern aufgewickelten Windungen des Wickelkörpers haftfähig gemacht.

EP 0 459 261 A2

Die Erfindung bezieht sich auf ein Verfahren zur Herstellung eines Wickelkörpers aus einem Lichtwellenleiter, mit welchem der Lichtwellenleiter von einer Spule abgezogen und in einer Wickelvorrichtung auf einen Kern aufgewickelt wird (DE-OS 38 17 030).

Solche Wickelkörper mit einer sehr großen Länge des aufgewickelten Lichtwellenleiters - im folgenden kurz "LWL" genannt - dienen beispielsweise zur Signalübertragung von bzw. zu einem sich fortbewegenden, angetriebenen Gerät. Das kann ein Flugkörper, aber auch ein Unterwassergerät sein. Das Gerät wird sehr schnell bewegt. Es soll dabei in jeder Position über den LWL mit seiner Basis verbunden bleiben. Der LWL muß also schnell und problemlos von dem Wickelkörper abgezogen werden können. Außerdem ist eine möglichst große Länge des LWL in einem möglichst kleinen Wickelkörper unterzubringen, der relativ wenig Raum einnimmt. Alle Forderungen sind nur schwer zu erfüllen, da ein LWL ein mechanisch empfindliches Gebilde ist, das durch zu hohe Zugbeanspruchung zerstört werden kann und außerdem leicht bricht.

Bei dem Verfahren nach der eingangs erwähnten DE-OS 38 17 030 wird der LWL zu einer Kreuzspule gewickelt. Mit dieser Wickeltechnik soll ein LWL am besten verarbeitbar sein, ohne daß seine optischen Eigenschaften verändert werden und ohne daß ein minimal zulässiger Krümmungsradius unterschritten wird. Um sicherzustellen, daß die Windungen des LWL beim Wickeln nicht von dem Wickelkörper abrutschen, erhält der LWL eine Umhüllung, durch welche er in Richtung der Wickelebene verbreitet wird. Das erfordert nicht nur eine aufwendige Sonderfertigung für den LWL, sondern steht auch der Forderung nach einer großen Länge des LWL auf kleinem Raum entgegen, da ein derart erweiterter LWL einen erhöhten Platzbedarf hat.

Der Erfindung liegt die Aufgabe zugrunde, das Verfahren der eingangs geschilderten Art so zu gestalten, daß ein handelsüblicher LWL auf einfache Weise zu einem stabilen Wickelkörper gewickelt werden kann, ohne daß Windungen des LWL beim Wickeln abrutschen können.

Diese Aufgabe wird gemäß der Erfindung dadurch gelöst, daß die äußere Oberfläche des LWL vor dem Auftreffen auf die bereits auf den Kern aufgewickelten Windungen des Wickelkörpers haftfähig gemacht wird.

Bei Einsatz dieses Verfahrens kann zur Herstellung des Wickelkörpers ein handelsüblicher LWL mit kreisrundem Querschnitt verwendet werden. Es kann also in einem volumenmäßig kleinen Wickelkörper eine relativ große Länge LWL untergebracht werden. Da die Oberfläche des LWL vor seinem Auftreffen auf bereits aufgewickelte Teile des Wickelkörpers haftfähig gemacht wird, haftet er sofort an diesen Teilen. Die Gefahr, daß der LWL beispielsweise an den Stirnseiten des Wickelkörpers aus seiner gewünschten Lage herausrutscht, besteht dadurch nicht mehr. Der LWL kann daher mit verminderter Zugspannung aufgewickelt werden und seine Beschädigung durch zu hohe Zugbelastung ist dementsprechend ausgeschlossen.

Das "Haftfähigmachen" der Oberfläche des LWL kann auf unterschiedliche Art und Weise sehr einfach beispielsweise durch Zufuhr von Wärme oder eines Lösungsmittels bewirkt werden.

Mit besonderem Vorteil wird auf die Oberfläche des LWL in einer Vorfertigung ein Schmelzkleber aufgebracht und getrocknet. Dabei eventuell frei werdende Lösungsmitteldämpfe können in einer geeigneten Vorrichtung störungsfrei abgeführt werden. Der so vorgefertigte LWL braucht dann in der Wickelvorrichtung nur noch erwärmt zu werden, um den Schmelzkleber zu aktivieren.

In allen Fällen muß die Haftfähigkeit des LWL so eingestellt werden, daß er zwar ausreichend fest an seiner Unterlage, den bereits aufgewickelten Windungen, haftet, beim späteren Abziehen vom oder aus dem Wickelkörper aber nicht behindert wird.

Weitere vorteilhafte Ausgestaltungen der Erfindung gehen aus den Unteransprüchen hervor.

Das Verfahren nach der Erfindung wird anhand der Zeichnungen in Ausführungsbeispielen erläutert.

Es zeigen:

Fig. 1 in schematischer Darstellung eine Vorrichtung zur Durchführung des Verfahrens nach der Erfindung.

Fig. 2 bis 4 zwei unterschiedliche Ausgestaltungen der Vorrichtung in vergrößerter Darstellung.

Fig. 5 einen mit dem Verfahren herstellbaren Wickelkörper.

Von einer Spule 1 wird ein zumindest mit einer äußeren Schutzschicht versehener LWL 2 (Festader) abgezogen und einer durch eine strichpunktierte Linie umrandeten Vorrichtung 3 zum Aufwickeln zugeführt. Zur Einstellung einer vorgegebenen Zugspannung für den LWL 2 wird derselbe über einen schematisch angedeuteten Zugspannungsregler 4 geführt.

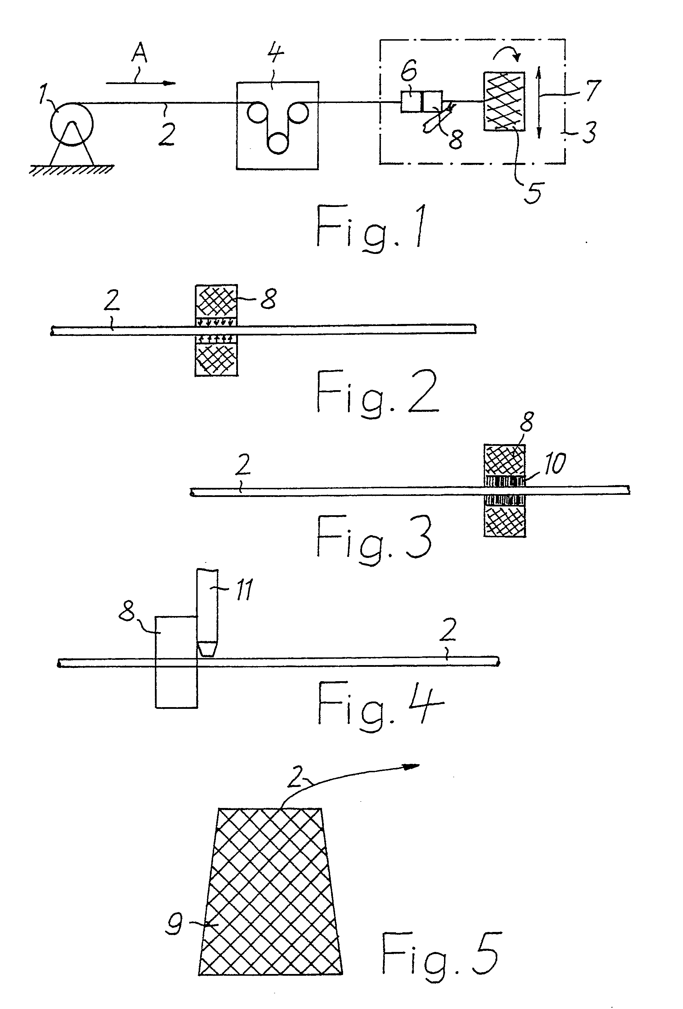

Der LWL 2 wird in der Vorrichtung 3 auf einen Kern 5 aufgewickelt, der um seine Achse drehbar ist. In Abzugsrichtung (Pfeil A) des LWL 2 ist vor dem Kern 5 eine Einrichtung 6 zur Führung des LWL 2 angeordnet. Während des Wickelvorgangs werden entweder der Kern 5 oder die Einrichtung 6 in Richtung des Doppelpfeiles 7 hin- und herbewegt. Zwischen Kern 5 und Einrichtung 6 ist eine Vorrichtung 8 angeordnet, mittels derer die Oberfläche des LWL 2 unmittelbar vor seinem Auftreffen auf schon auf den Kern 5 gewickelte Lagen haftfähig gemacht wird. Bei der Vorrichtung 8 kann es sich beispielsweise um eine in Fig. 1 schematisch angedeutete Flamme handeln, mit welcher die Oberfläche des LWL 2 erwärmt wird. Die Vorrichtung 8 wird zweckmäßig mit der Einrichtung 6 gekoppelt, so daß ihre Position zum LWL 2 stets festliegt.

Durch den sich drehenden und beispielsweise in Richtung des Doppelpfeiles 7 hin und her bewegenden Kern 5 wird der LWL 2 beispielsweise in sich kreuzenden Lagen auf denselben aufgewickelt. Er kann allerdings auch parallel auf den Kern 5 aufgewickelt werden. Da der LWL 2 an seiner Oberfläche haftfähig ist, haftet er sofort nach seinem Auftreffen auf das bereits auf dem Kern 5 befindliche Material an demselben. Er kann dementsprechend auch bei relativ niedriger Zugspannung insbesondere an den freien Stirnseiten des Kerns 5 bzw. des entstandenen Wickels nicht mehr abrutschen.

Der Kern 5 kann zylindrisch oder konisch ausgeführt sein. Falls gewünscht, kann der Kern 5 in dem fertigen Wickelkörper 9 (Fig. 5) verbleiben. Er kann zur Herstellung eines spulenlosen Coils jedoch nach Fertigstellung des Wickelkörpers 9 auch aus demselben entfernt werden. Das läßt sich beispielsweise in üblicher Technik mit einem geteilten Kern erreichen. Für diesen Fall ist es zweckmäßig, die am Kern 5 anliegende innere Lage des Wickelkörpers 9 entweder nicht haftfähig zu machen oder auf dem Kern 5 ein Trennmittel anzubringen, das ein Verkleben des LWL 2 mit dem Kern 5 verhindert.

Um die Haftfähigkeit der Oberfläche des LWL 2 zu erreichen, gibt es unterschiedliche Möglichkeiten:

In einer bevorzugten Ausführungsform wird in einer Vorfertigung auf den LWL 2 ein Schmelzkleber aufgebracht, der danach getrocknet wird. Frei werdende Lösungsmitteldämpfe lassen sich hier besonders einfach umweltfreundlich abführen. Der LWL 2 kann mit getrockneter Oberfläche auf eine Spule aufgewickelt und solange auf Vorrat gehalten werden, bis ein Wickelkörper 9 hergestellt werden soll. In diesem Fall wird der LWL 2, wie an Hand von Fig. 1 erläutert, der Vorrichtung 3 zugeführt. Seine Oberfläche wird in der Vorrichtung 8 erwärmt, was durch eine Flamme oder auch durch eine elektrische Heizquelle erreicht werden kann, wie sie in Fig. 2 schematisch angedeutet ist. Der Schmelzkleber wird dadurch aktiviert und der LWL 2 haftet ausreichend fest am Wickelkörper 9 bzw. an den aufgewickelten LWL-Lagen.

Wenn statt des Schmelzklebers ein Haftkleber verwendet wird, kann die Vorbereitung des LWL 2 grundsätzlich die gleiche wie beim Schmelzkleber sein. Zur Aktivierung des Haftklebers wird in der Vorrichtung 8 ein Lösungsmittel angebracht, das entsprechend der Darstellung in Fig. 3 beispielsweise über einen Filz 10 auf die Oberfläche des LWL 2 aufgebracht wird und dadurch den Haftkleber aktiviert.

Eine Vorrichtung 8 mit einem Lösungsmittel kann grundsätzlich auch dann verwendet werden, wenn der LWL 2 eine äußere Schutzschicht hat, die durch ein Lösungsmittel so angelöst werden kann, daß sie haftfähig wird. Hierbei muß sichergestellt sein, daß Lösungsmitteldämpfe umweltfreundlich abgeführt werden können und daß die Schutzschicht des LWL 2 nicht beschädigt wird.

Eine weitere Möglichkeit zur Überführung der Oberfläche des LWL 2 in einen haftfähigen Zustand besteht darin, daß erst in der Vorrichtung 8 auf den vorher nicht veränderten LWL 2 mittels einer Zuführung 11 ein Kleber aufgebracht wird. Bei entsprechender Dosierung kann auch dann eine klebfähige Schicht erzeugt werden, die den gestellten Anforderungen bezüglich ausreichender aber nicht zu starker Haftung des LWL 2 genügt und die schon nach kurzer Zeit eine ausreichende Festigkeit hat.

Bei einem konischen Kern 5 wird entsprechend Fig. 5 auch ein konischer Wickelkörper 9 erzeugt. Der Wickelkörper 9 wird in ein Gerät eingebaut, das sich entweder selbst mit großer Geschwindigkeit von einer Basis entfernt oder das selbst Basis ist, von der ein Gerät startet. In beiden Fällen muß der LWL 2 sehr schnell vom Wickelkörper 9 abgewickelt werden können. Dazu wird er beispielsweise entsprechend Fig. 5 aus dem Inneren des Wickelkörpers 9 herausgezogen. Der Wickelkörper 9 ist in diesem Fall hohl. Der LWL 2 kann aber auch außen vom Wickelkörper 9 abgezogen werden. Das ist stets dann der Fall, wenn der Kern 5 im Wickelkörper 9 verbleibt.

In allen Fällen, in denen ein Kleber auf die Oberfläche des LWL 2 aufgebracht wird, kann auch ein durch UV-Strahlen aushärtbarer Kleber verwendet werden. Die dazu notwendige UV-Lichtquelle kann wieder mit der Einrichtung 6 gekoppelt werden.

**Patentansprüche**

1. Verfahren zur Herstellung eines Wickelkörpers aus einem Lichtwellenleiter, mit welchem der Lichtwellenleiter von einer Spule abgezogen und in einer Wickelvorrichtung auf einen Kern aufgewickelt wird, dadurch gekennzeichnet, daß die äußere Oberfläche des Lichtwellenleiters (2) vor dem Auftreffen auf die bereits auf den Kern (5) aufgewickelten Windungen des Wickelkörpers (9) haftfähig gemacht wird.

2. Verfahren nach Anspruch 1, dadurch gekennzeichnet,

- daß auf den Lichtwellenleiter (2) eine Schicht aus einem Kleber aufgebracht und anschließend getrocknet wird und
- daß der Kleber unmittelbar vor dem Auftreffen des Lichtwellenleiters (2) auf die bereits aufgewickelten Windungen des Wickelkörpers (9) aktiviert wird.

3. Verfahren nach Anspruch 1 oder 2, dadurch gekennzeichnet, daß ein Schmelzkleber verwendet wird, der durch Wärmezufuhr aktiviert wird.

4. Verfahren nach Anspruch 1 oder 2, dadurch gekennzeichnet, daß ein Haftkleber verwendet wird, der durch Anlösen aktiviert wird.

5. Verfahren nach Anspruch 1, dadurch gekennzeichnet, daß auf die Oberfläche des Lichtwellenleiters (2) unmittelbar vor seinem Auftreffen auf die bereits aufgewickelten Windungen des Wickelkörpers (9) ein Kleber aufgetragen wird.

6. Verfahren nach einem der Ansprüche 1 bis 5, dadurch gekennzeichnet, daß ein Kleber verwendet wird, der mittels ultravioletter Strahlung aushärtbar ist.

7. Verfahren nach Anspruch 1, dadurch gekennzeichnet, daß die äußere Oberfläche der den Lichtwellenleiter (2) umgebenden Schutzschicht unmittelbar vor dem Auftreffen des Lichtwellenleiters (2) auf die bereits aufgewickelten Windungen des Wickelkörpers (9) durch Anlösen haftfähig gemacht wird.

Fig.1

Fig.2

Fig.3

Fig.4

Fig.5